# EUROPEAN PATENT SPECIFICATION

(11) **EP 3 066 339 B1**
(45) Date of publication and mention of the grant of the patent: **08.07.2020**
(21) Application number: 14730760.7
(22) Date of filing: 22.05.2014
(51) Int. Cl.: F03D 13/00, F03D 13/20, F03D 3/00, F03D 3/06, F03D 80/30, F03D 80/00

(54) **VERTICAL AXIS WIND TURBINE**
WINDTURBINE MIT VERTIKALER ACHSE
ÉOLIENNE À AXE VERTICAL

(30) Priority: 22.05.2013 GB 201309184
(43) Date of publication of application: 14.09.2016
(73) Proprietor: Ryse Energy Holdings Limited, Abu Dhabi (AE)
(72) Inventor: TOWELL, Keith John, Guildford Surrey GU2 7NN (GB)
(74) Representative: Milhench, Mark Lorne
(86) International application number: PCT/EP2014/060568
(87) International publication number: WO 2014/187912

(56) References cited:
- WO-A1-91/08394
- GB-A- 1 593 329
- US-A1- 2004 047 723
- US-A1- 2013 101 360

## Description

### Field

This invention relates, in general terms, to so-called vertical axis wind turbines (VAWT). Such turbines, in contrast to horizontal axis wind turbines (HAWT), include a blade assembly that rotates about an axis which is generally perpendicular to the ground.

### Background

It is generally accepted that VAWT offer a number of advantages over HAWT. For example, VAWT can be packed closer together in wind farms, allowing more in a given space. This is largely due to the intolerance of HAWT for the highly-turbulent yet energy-deficient wake of other HAWT upwind, forcing wind-farm designers to separate adjacent HAWT by distances that are several times their diameter. Indeed, recent research has shown that the power output of a wind farm of a given size can be greatly increased by deploying VAWT instead of HAWT.

It is also the case that VAWT tend to be quieter than a comparable HAWT. VAWT can function adequately in turbulent air streams (making them particularly good for relatively low height installations), and are thus well suited for installation in urban and semi-urban environments. They also provide an operationally more efficient system.

A typical VAWT comprises a plurality of vertical aerodynamic blades that are arranged around and coupled to a central rotor that is mounted on top of a tower. The rotor is coupled to a drive shaft that is in turn connected to a generator. The generator is coupled to power conditioning circuitry, and via that circuitry to a load, such as the mains electrical grid. Incident wind causes the aerodynamic blades to move and the rotor to spin. The rotational motion of the rotor is transmitted via the driveshaft (and often a gearbox) to the generator, which generates electricity.

For relatively short, low-power VAWT the towers are typically relatively small and can be mounted to a roof top, for example. For larger industrial scale VAWT, concrete foundations must first be poured and levelled before the tower is secured to the foundation.

For a typical industrial-scale VAWT with a tower that is roughly 30 metres high, the foundations typically require several hundred tons of concrete to be poured, and this can prove problematic when the VAWT is to be installed in a protected rural area (such as an area of outstanding natural beauty) as any planning permission granted for the installation often requires the foundations to be removed when the VAWT is dismantled. Similar problems affect areas that have difficult access or terrain which inhibits access for the required plant and equipment and thus require the construction of access roads and hard standing areas for construction. This is particularly disadvantageous as some of the windiest areas in the United Kingdom are areas of outstanding natural beauty or sites with difficult access. A further disadvantage of using concrete foundations is that it delays the turbine assembly process, as the concrete must be poured and then allowed to cure before the turbine can be assembled. Rigid concrete foundations are also problematic in that care must be taken to ensure that harmonic vibrations resulting from operation of the turbine are appropriately damped.

An associated problem with installations in rural areas is that the land is often not level, and thus considerable resources must be invested to ensure that the foundations are properly levelled before a VAWT is installed.

Another problem affecting both conventional VAWT and HAWT is that these devices can have relatively significant radar signatures, and thus cannot typically be installed near airports or other facilities that use radar. This is a particularly significant problem as airports are often located at "out of town" sites which are less built up, and thus would otherwise be a good candidate for the installation of wind turbines were it not for their radar signature.

Another problem concerns the aerodynamic blades of conventional VAWT and other wind turbines. The blades of conventional VAWT are typically formed of two profiled sections of glass fibre material which are then joined together to form the blade. It has been noted that over time, abrasion, flexure and moisture ingress can damage the joint between the glass fibre profiles and cause the profiles to separate. If this should happen the turbine must be taken out of commission and the blade repaired or replaced. Since the turbine cannot be operating whilst this work is undertaken, significant financial losses can quickly accrue.

A related issue with HAWT, in particular, is that whilst the blades of the turbine comprise an aerodynamic profile in cross-section, they tend to have tip profiles that are not optimised for performance.

A further problem that affects all types of wind turbine, concerns how best to secure the turbine when high winds are forecast. Conventional HAWT comprise a braking system, and the blades of the turbine can be trimmed so that the incident winds do not exert a turning moment that exceeds the capacity of the braking system installed in the turbine. However, in a VAWT, some of the blades of the turbine will inevitably be orientated to the prevailing wind in such a way that significant turning moments can be induced by high winds. Thus a typical braking system of the type installed in a conventional HAWT cannot be relied upon to prevent a VAWT turbine from turning in high winds.

Aspects of the present invention have been devised with the foregoing problems in mind.

International PCT Patent Application No. WO91/08394 discloses a wind turbine for collecting wind energy, the turbine comprising: a mast; a plurality of upright rotor blades spaced circumferentially and radially spaced from an axis of rotation; and a support structure for the rotor blades which leads from the mast to the rotor blades.

US Patent Application no. 2013101360 discloses a helical screw pile that includes a longitudinal shaft having a top end and a bottom end with a plurality of helical plates arranged on the shaft in increasing diameter from the top to the bottom. The first helical plate is located toward the bottom of the shaft and has the largest diameter. The second helical plate is located above the first helical plate and has a diameter smaller than that of the first plate. The third helical plate is located above the second helical plate and has a diameter smaller than that of the second plate. The helical plate with the smallest diameter is located toward the top of the shaft. The distance between the first helical plate and the second helical plate is larger than the distance between the second helical plate and the third helical plate.

### Summary

One presently preferred implementation of the teachings of the invention provides a vertical-axis wind turbine (VAWT) as defined in Claim 1.

Preferred features of the VAWT are set out in the dependent claims.

Other aspects and advantages of the teachings of the present invention will be apparent from the following detailed description.

### Brief Description of the Drawings

Various aspects of the teachings of the present invention, and arrangements embodying those teachings, will hereafter be described by way of illustrative example with reference to the accompanying drawings, in which:
Fig. 1 is a schematic top plan view of a grillage configuration;
Fig. 2 is a schematic top plan view of a tower grillage;
Fig. 3 is a cross-sectional view along the line A-A in Fig. 2;
Fig. 4 is a cross-sectional view along the line B-B in Fig. 2;
Fig. 5 is an enlargement of part of Fig. 3;

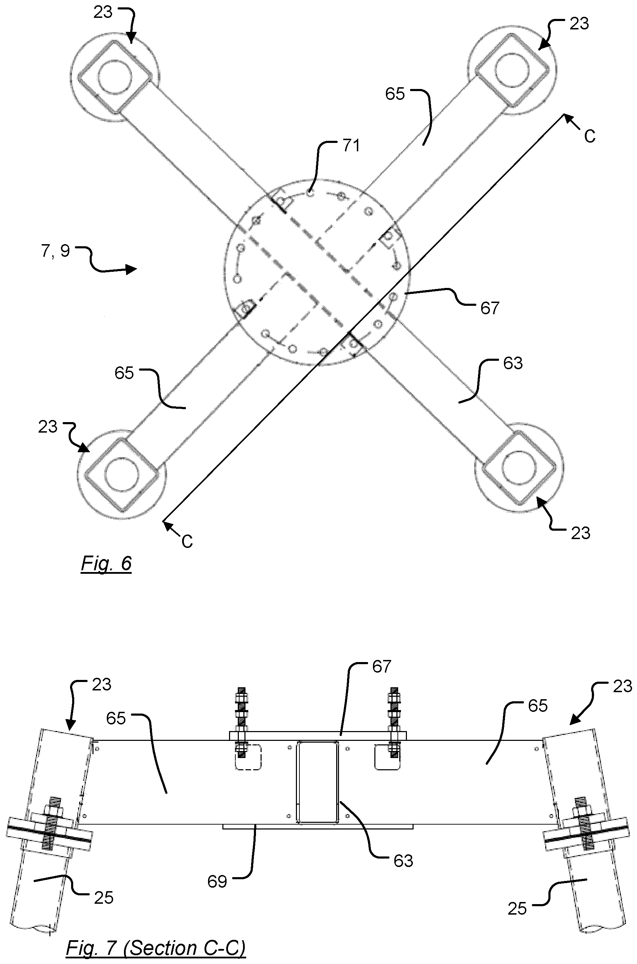

Fig. 6 is a schematic top plan view of a buttress grillage;
Fig. 7 is a cross-sectional view along the line C-C in Fig. 5;
Figs. 8, 9 and 10 are left, rear and front elevations (respectively) of a VAWT for installation on the grillage of Fig. 1;
Figs 11 and 12 are enlarged views of part of the VAWT depicted in Figs. 8 to 10;
Fig. 13 is an enlargement of part of Fig. 11 with components removed;
Fig. 14 is an enlarged view of Fig, 13 with further components removed;
Fig. 15 is a plan view of a brake disk;
Fig. 16 is a schematic perspective view of part of a primary braking system;
Fig. 17 is a schematic perspective view of part of a secondary braking system;
Fig. 18 is a schematic perspective view of a blade assembly;
Figs. 19 and 20 depict part of the blade assembly shown in Fig. 18;
Figs. 21 to 24 are different views of a winglet that forms part of the blade assembly depicted in Fig. 18;
Fig. 25 is a top perspective view of the blade assembly; and
Fig. 26 is a schematic representation of a spreader attachment.

### Detailed Description

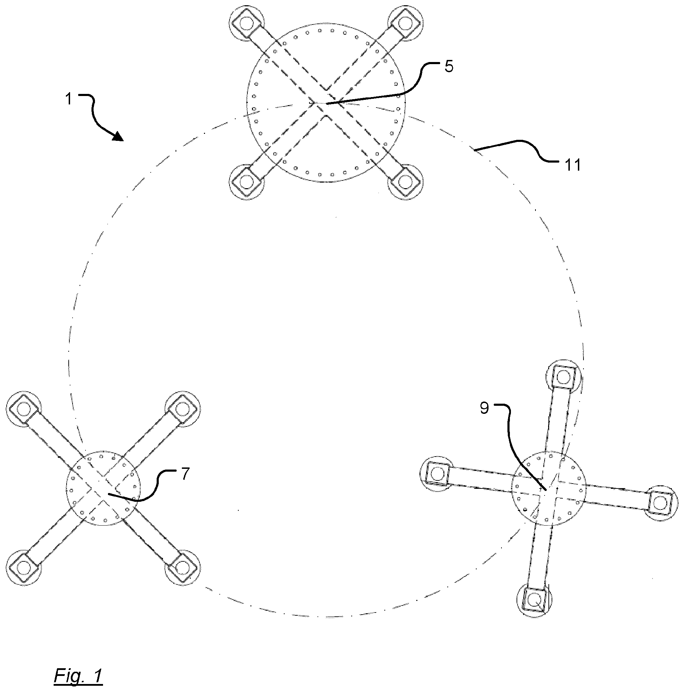

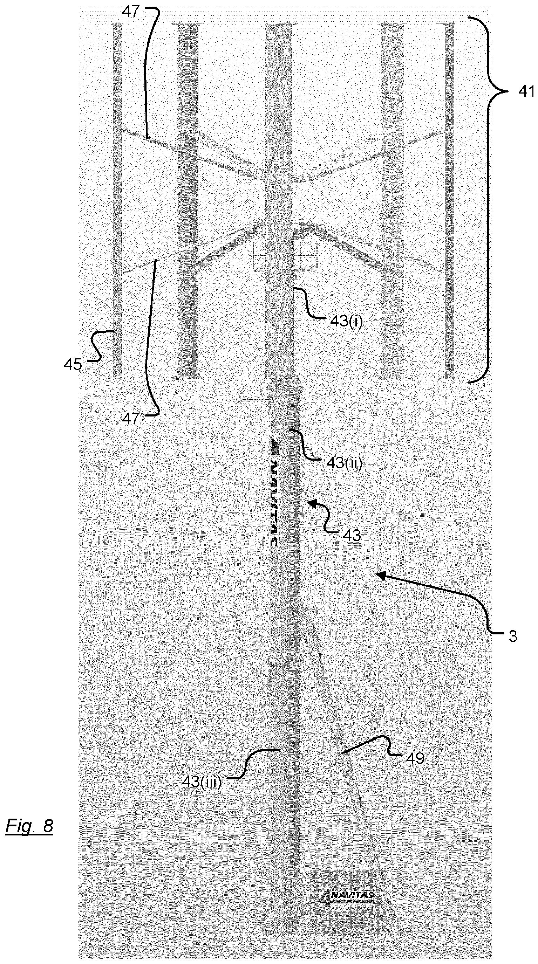

Referring now to Fig. 1 of the drawings, there is depicted a support structure 1 for a VAWT, more particularly for a VAWT 3 of the type shown in Figs. 8 to 10. The support structure 1 comprises a tower grillage 5, and two buttress grillages 7, 9 arranged at spaced locations around the perimeter of a circle. In this particular example the centre of each grillage is located at the vertex of an equilateral triangle with sides of approximately 5 metres, and the diameter of the circumcircle 11 passing through each grillage centre is approximately 6 metres. Each grillage comprises two limbs set at right angles to one another so that the ends of the limbs form a square having sides that are approximately 1.8 metres in length.

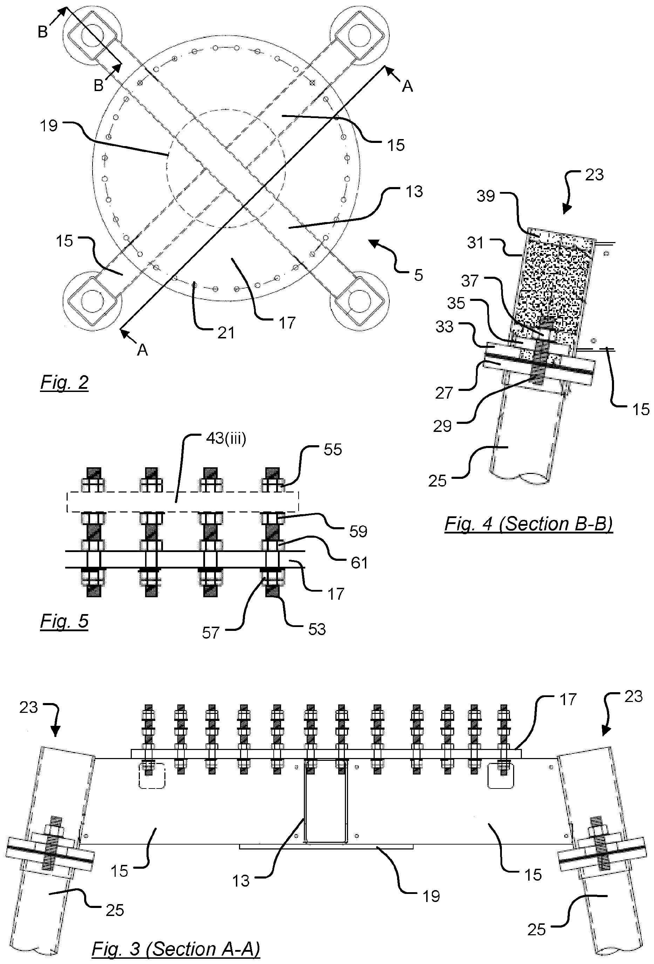

Fig. 2 is a schematic representation of the tower grillage 5. The tower grillage 3 comprises a main box-section beam 13 (typically of steel). Two shorter sections of box-section beam 15 are welded to the main beam so as to extend from either side of the main beam 15 at right angles thereto. A top plate 17 is fixed (for example, by welding) on top of the beams 13, 15 centred on the centre of the grillage, and a smaller bottom plate 19 is fixed to the underside of the beams 13, 15 centred on the centre of the grillage. The top plate 17 includes (in this particular example) thirty-six through holes 21 set at 10 degree intervals around the periphery of the plate.

Referring now to Figs. 3 and 4, opposite ends of the main beam 13 and the free ends of the shorter beams 15 are each coupled to a screw pile connector 23 that is configured to connect the grillage 5 to four screw piles 25 that are driven into the ground so that they are raked outwardly from the centre of the grillage 5 at an angle of about 10 degrees. Each pile 23 terminates in a pile drive plate 27 into which a galvanised threaded stud 29 has been fixedly set. The screw pile connector 23 comprises a grout box 31 that terminates in an annular grillage bearing plate 33 through which the galvanised stud 29 projects when the grillage bearing plate 33 is abutted against the pile drive plate 27. A c-shaped plate 35 is fitted round the stud 29, and a nut 37 is tightened on the threaded stud 29 to couple the screw pile connector to the pile. The grout box 31 is then filled with an inert material (such as grout) before being capped by a cap 39 to reduce water ingress.

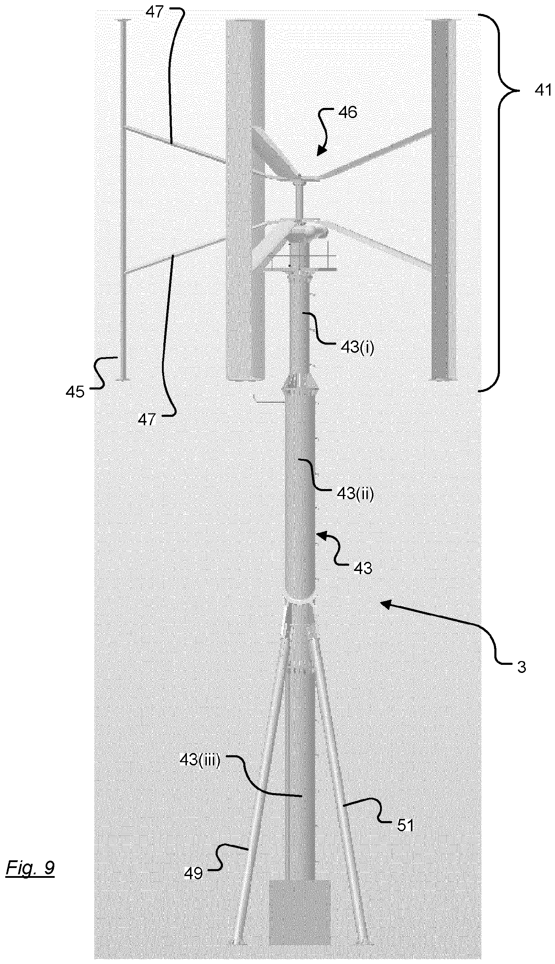

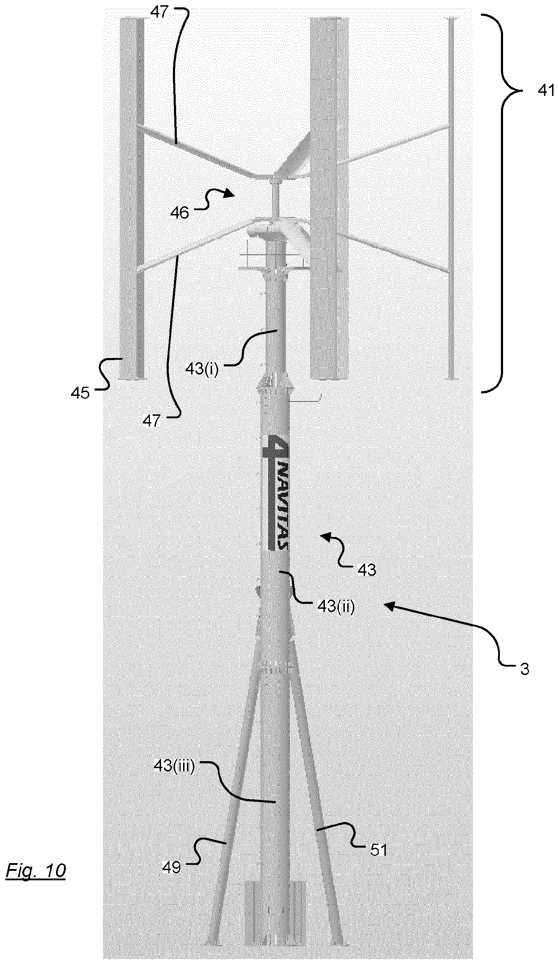

As shown in Figs. 8 to 10, the VAWT 3 comprises a turbine assembly 41 mounted on top of a support tower 43 that comprises a top section 43(i), a mid section 43(ii) and a lower section 43(iii). The turbine assembly (in this particular example) comprises five blades 45 that are each coupled to a rotor assembly 46 (visible in Figs. 9 & 10) by a pair of spreaders 47. In other arrangements a greater or fewer number of blades may be provided.

In the depicted arrangement, the VAWT is approximately 37 metres tall, each blade is approximately 14 metres long, and about seven metres from the rotor assembly 46. The support tower 43 is braced by first and second buttresses 49, 51 so that the overall shape of the tower and buttresses is asymmetrical and resembles a canted tripod. The two buttress legs allow the main tower to be of much lighter construction than a conventional cantilever tower. In addition, by manufacturing the tower in sections, the VAWT can more easily be transported for assembly on site.

As will no doubt already be appreciated, the top plate 17 of the tower grillage 5 functions as a support surface for the tower 43. Similarly, the buttress grillages 7, 9 each function as a support for the buttresses 49, 51.

The top plate 17 of the tower grillage 5 is fixed to the lower section 43(iii) of the support tower 43 by means of a plurality of threaded studs 53 (in this instance, 36 studs) that extend through the through holes 21 of the plate 17. Referring now to Fig. 5, each threaded stud 53 carries upper and lower lock nuts 55, 57, and upper and lower nuts 59, 61. The lock nuts 55, 57 prevent the lower section 43(iii) of the tower from separating from the support plate 17 of the grillage, and when the spacing between the upper and lower nuts 59, 61 is the same from stud to stud 53, the base of the lower section 43(iii) will be parallel to the top plate 17 of the grillage.

As will be appreciated by persons skilled in the art, by varying the spacing between the upper and lower nuts 59, 61 (and consequently between the lock nuts) around the periphery of the support plate 17, it is possible to lean the support tower 43(iii) relative to the support plate 17 of the tower grillage 5. In a similar fashion, as will later be described, the inclination angle of the buttresses relative to their buttress grillages can also be varied.

As will be appreciated by persons skilled in the art, this arrangement makes the levelling of the site less important than it would be for four legs, for example, and provides greater tolerance of dissimilar foundation settling (due to the fact that the angle of inclination of each buttress can be varied). An additional benefit of this arrangement is the ability to lean the VAWT, for example to mitigate against planning objections by aviation interests where turbines can interfere with radar returns. Tilting the entire assembly works for both static and rotating parts. With a conventional VAWT, a VAWT rotor that is roughly edge on to radiation from a radar installation gives a large return with Doppler velocity content. By leaning the VAWT away from the radar installation, reflected radiation will tend to propagate upwardly and over the top of the radar installation so that the VAWT has a Doppler content similar to a slow road vehicle. In a similar manner, leaning the VAWT towards the radar installation can deflect the radar return into the ground, thereby reducing the return to the radar installation.

It is also the case that when the tower is tilted, not only does the tower return and those of the blades have strong directionality so that the strong return will pass above the radar and so be a much smaller signal at the radar, but also of each pair of our nearly-horizontal spreaders the upper one will be moved slightly away from the radar and the lower one will be moved slightly towards it, so there will be a phase difference between the return from the spreaders so at some angle of tower tilt the upper and lower spreaders' returns will cancel out in the direction of the radar, thus creating a very deep null in the return from the spreaders.

Fig, 6 is a top plan view of a buttress grillage 7, 9 (n.b. both buttress grillages are identical). The buttress grillages are of the same construction as the tower grillage 5, and comprise a main box-section beam 63 to which two shorter box-section beams 65 are fixed at right angles to form an X. The ends of the main beam and the free ends of the shorter beams are each coupled to a screw pile connector 23 that is identical to those used with the tower grillage 5 (and hence will not further be described). The screw pile connectors 23 couple each of the buttress grillages to four screw piles 25 that are identical to those used for the tower grillage 5. The main beam 63 and shorter beams 65 are coupled to a top plate 67 and a bottom plate 69, and in this instance the top plate includes sixteen through-holes 71 set at 22.5 degree intervals around the periphery of the plate.

Threaded studs (in this instance, 16 studs) extend through the through holes 71 of the plate 67. In the same manner as the tower grillage 5, each threaded stud carries upper and lower lock nuts, and upper and lower nuts. The lock nuts prevent the buttresses from separating from the buttress grillages, and when the spacing between the upper and lower nuts is the same from stud to stud 53, the base of each buttress will be parallel to the top plate 67 of the associated buttress grillage 7, 9. As with the tower grillage 5, by varying the spacing between the upper and lower nuts (and consequently between the lock nuts) around the periphery of the support plate 67, it is possible to vary the angle of inclination one or both of the buttresses relative to the support plate 67 of the associated grillage 5.

By utilising grillages and screw piles, it is possible to erect and secure a VAWT without using any concrete. The VAWT disclosed herein can more quickly be installed than similar VAWTs that require concrete foundations, and the screw piles and grillages can be removed from the ground and recycled if the VAWT should be decommissioned (thereby enabling the VAWT to be sited in more ecologically sensitive sites). It is also the case that as the VAWT can readily be dismantled, the grillages removed and piles unscrewed, the full installation can easily be re-installed at a different location. it is also the case that by avoiding the delivery of hundreds of tons of concrete to site, the carbon footprint of the installation can greatly be reduced.

Another significant advantage associated with the use of screw piles is that, in many instances, the use of piles obviates the need for any harmonic damping of the VAWT - as would typically be required were the VAWT to be fixed to a rigid concrete mass, for example. In particular, the elasticity of the screw piles and the shear force between the screw piles and the ground can have a beneficial effect of reducing the natural frequencies of the tower structure and increasing damping compared to a VAWT with a concrete foundation. Referring again to Figs. 8 to 10, the tower 43 of the VAWT 3 could, in one envisaged implementation, be manufactured in modules, thereby allowing modules to be omitted or added to allow for height variations that may be required to alleviate planning restrictions or deal with air flow obstructions. Since most wind turbine or wind farm sites tend to have a pronounced prevailing wind direction, the preferred orientation of the buttresses is so that they are in compression for the prevailing wind. In the United Kingdom this means that the buttresses will typically be on the East side of the support tower 43.

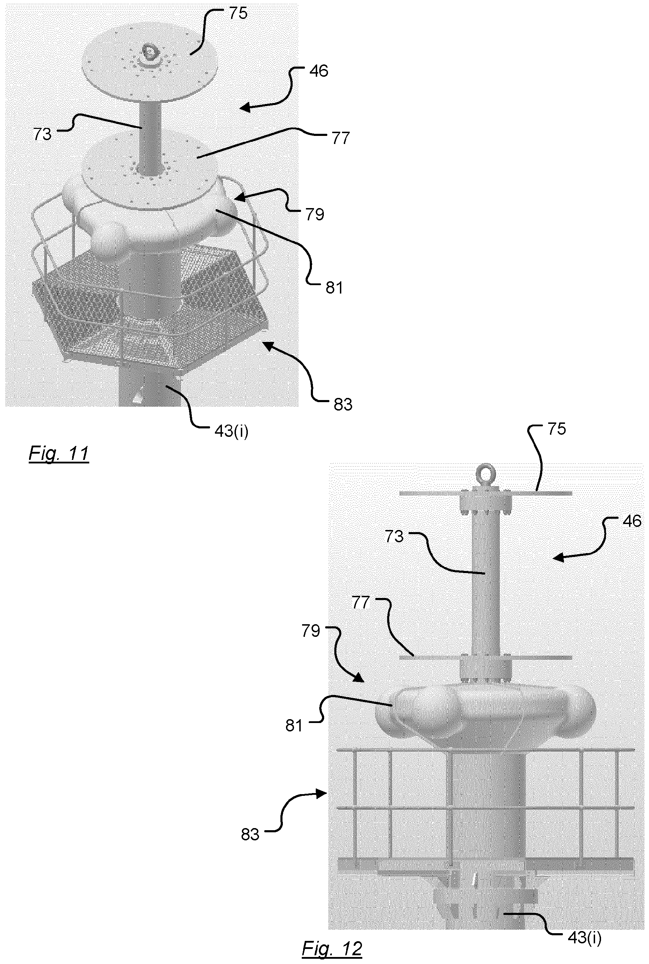

Figs. 11 and 12 are schematic representations of the top section 43(i) of the tower 43 showing the rotor assembly 46. Note that the blades 45 and spreaders 47 have been omitted from these figures so that the rotor assembly can more clearly be seen.

The rotor assembly 46 is coupled to a drive shaft 73 that extends downwards through the tower 43. The drive shaft may be in one section, or - more conveniently - be in shorter sections that are joined to one another on-site. As with conventional VAWT, the tower 43 includes bearings (not shown) that allow the drive shaft to rotate with respect to the tower 43.

The rotor assembly 46 comprises a top spreader plate 75, a bottom spreader plate 77 and a braking assembly 79 that is covered by a removable braking assembly cover 81. A platform 83 is secured to the top section 43(iii) of the tower 43 so that the braking system and bearings can be maintained as necessary.

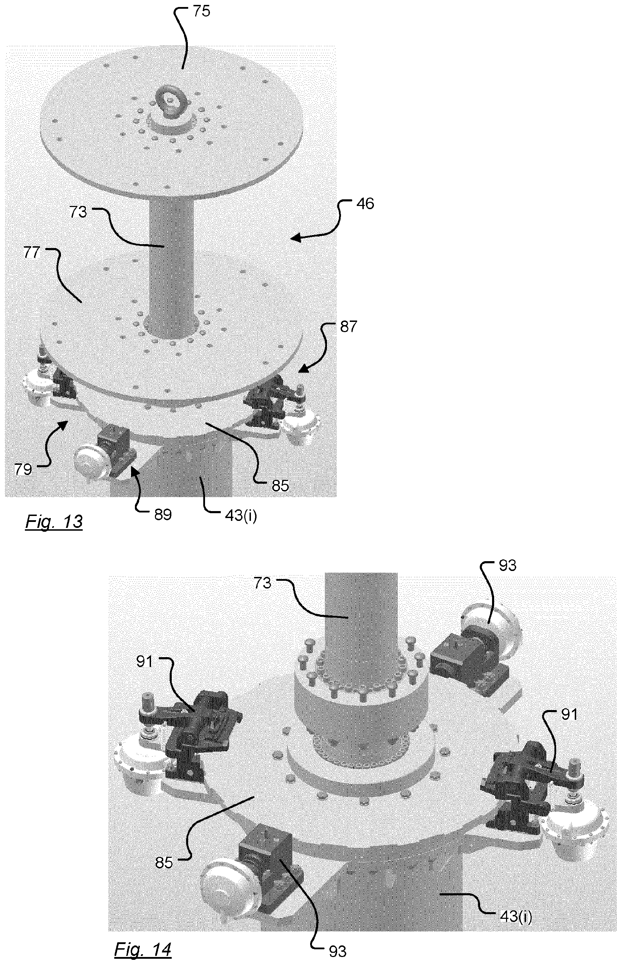

Referring now to Fig. 13 (in which the braking assembly cover 81 has been omitted), the braking assembly 79 comprises a brake disk 85, a primary braking system 87, and a locking system 89. The top spreader plate, bottom spreader plate and the brake disk are fixedly coupled to the drive-shaft so that they spin with the shaft whilst the VAWT is operating. In a particularly preferred arrangement, these components are each coupled to the drive shaft by means of a conventional taper-lock clamping mechanism that reduces the likelihood of the shaft being damaged. As shown in Fig. 14 (in which the bottom spreader plate has been omitted), the primary braking system comprises a pair of calliper brakes 91 that are located diametrically opposite one another around the periphery of the brake disk 85, and can be brought to bear upon the brake disk 85 to slow the rotor assembly. The locking system comprises a pair of safety locks 93 that are located diametrically opposite one another around the periphery of the brake disk can be brought to bear upon the brake disk 85 to lock the rotor assembly in position.

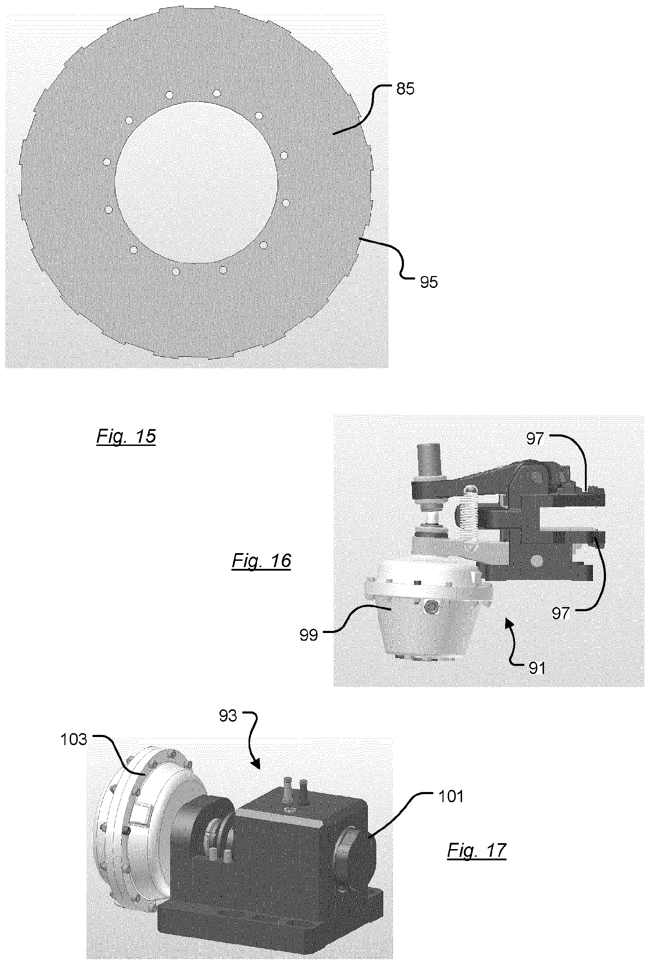

As shown in Fig. 15, the brake disk 85 is circumferentially castellated (notched) so as to form a plurality of notches 95 around the entire periphery of the disk. Each calliper brake 91 functions in a similar manner to a conventional disk brake on a motor vehicle, and comprises - as shown in Fig. 16 - a pair of jaws 97 (each carrying a brake pad) that can be closed by an actuator 99 to grip, and hence slow, the brake disk 85.

Each safety lock 93 comprises - as shown in Fig. 17 - an actuator 103 that can be operated to drive a piston 101 radially inwardly into engagement with a notch 95 in the brake disk 85 to lock the brake disk and hence prevent the drive shaft from spinning. In a preferred implementation both the safety lock actuator 103 and the calliper brake actuator 99 are pneumatic actuators, and the calliper brake actuator is fail-safe. In another envisaged implementation the safety lock actuator and calliper brake actuator may be hydraulic.

In an envisaged implementation, when it is desired to stop the VAWT from operating, a control system uses regenerative braking to slow the brake disk, and the drive shaft to which it is coupled, to a halt. The calliper brakes 91 are operated by the control system. In a preferred arrangement, the control system is configured to halt the brake disk at a position where the pistons 101 of the safety lock are each aligned with a notch 95 in the brake disk periphery. Once the calliper brakes have been applied, the control system then operates the actuator of the safety locks to drive the pistons into the respective notches, and thereby secure the disk brake 85 (and hence the remainder of the rotor assembly 46) from further rotation.

As will be appreciated, the braking system described above effectively addresses the issues described above with conventional HAWT braking systems. In particular, the braking system described above addresses the fact that in a VAWT it is not possible to trim the blades of the turbine so that the incident winds do not exert a turning moment.

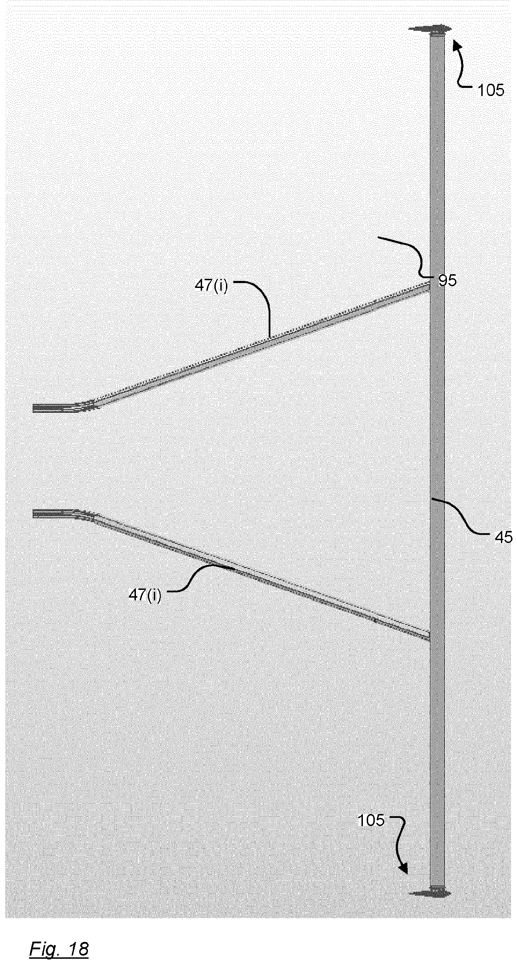

Fig. 18 is a schematic representation of a blade assembly for the VAWT. The blade assembly comprises a blade 45, an upper spreader 47(i) that attaches to the top spreader plate 75, and a lower spreader 47(ii) that attaches to the bottom spreader plate 77. The blade assembly also includes a pair of delta shaped winglets 105 (described later in detail) to at least the uppermost end of each blade, and in this implementation to both ends of the blade 45. The winglets 105 enhance the aerodynamic performance of each blade without increasing the length of the blade. The delta winglets can also form part of a lightning protection system that will later be described in detail.

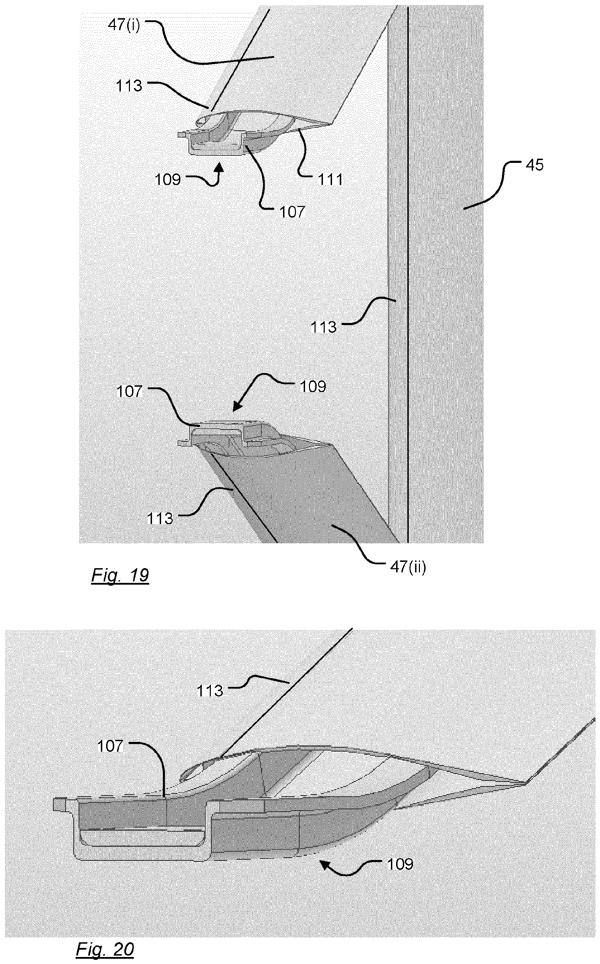

Referring now to Figs. 19 and 20, each spreader 47(i), 47(ii) comprises a "top hat" section spar 107 that includes an end portion 109 which extends generally perpendicularly to the plane of the blade 45 and functions as a means to enable the spreader 47 to be coupled to the top or bottom spreader plate, as appropriate. The remainder of each spar 107 is inclined relative to the aforementioned end portions (for example at an angle of approximately 72 degrees) and extends through the spreader 47 to the blade 45. An aerodynamic skin 111 is fitted over the spar to give the spreaders a desired aerodynamic shape. In one implementation, the aerodynamic skin is formed by two appropriately shaped components that are joined together. The spar may be manufactured from any of a number of materials, but in a preferred implementation the spar (and optionally the remaining components of the blade assembly) is of a composite material such as fibreglass so that the weight of the blade assembly is reduced.

In one implementation, the leading edge of the spreaders and the blade are covered by a sacrificial skin 113. As mentioned above, it is conventional for the blades 5 of a VAWT to be manufactured in two sections that are subsequently joined to form an aerofoil blade that is then attached to the rotor. The blades will be exposed to the elements for their entire life, and as such it is not unusual for abrasion, flexure and moisture ingress to cause damage. The aforementioned sacrificial skin combats this problem by obstructing water ingress. The skin also protects the spreader and blade leading edge from impact damage, and may - as will be later described - form part of a lightning conductor. As most impact strikes from foreign flying objects such as birds or storm debris would likely impact the blades or spreaders on the leading edge, the sacrificial skin would take the impact as opposed to the aerodynamic sections. Finally, the proposed sacrificial skin allows for different aerodynamic profiles to be used on a common composite blade or spreader shell to allow for different aerodynamic properties where required for specific markets. The sacrificial skin could be of aluminium for lightning strike, durability and lightness; or stainless steel for durability, or a composite for lightness.

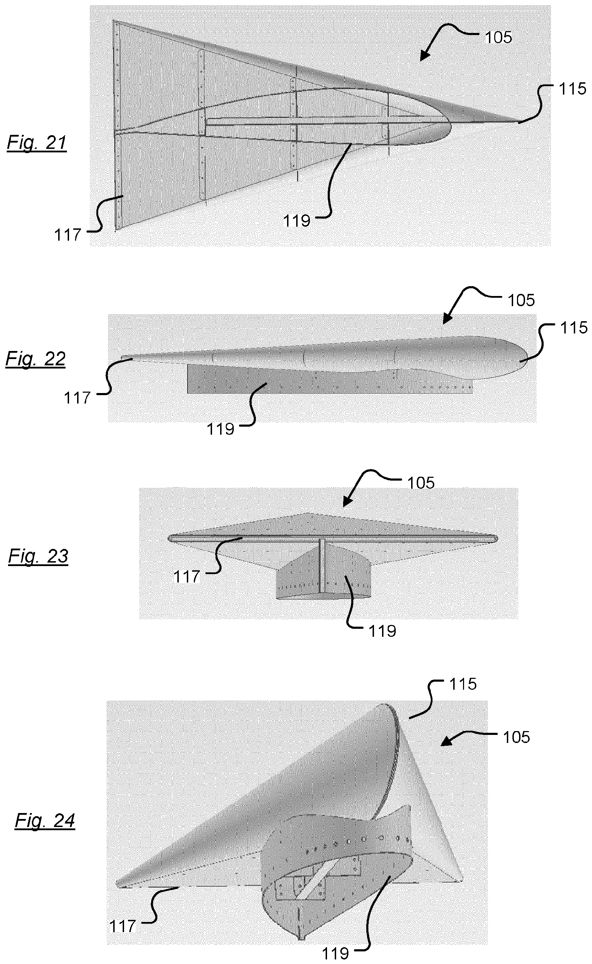

Referring now to Figs. 21 to 24, there are shown various different views of a winglet 105 that forms part of the blade assembly depicted in Fig. 18. The winglet widens (in a lateral dimension) from a tip portion 115 to a tail portion 117 so that the winglet has an overall delta-shape. The winglet carries a cowl 119 that fits closely over the end of the blade 45 and mimics the aerodynamic shape of the blade. In one envisaged implementation, the winglet may be of an electrically conducting material (such as aluminium, for example) and may comprise part of a lightning protection system.

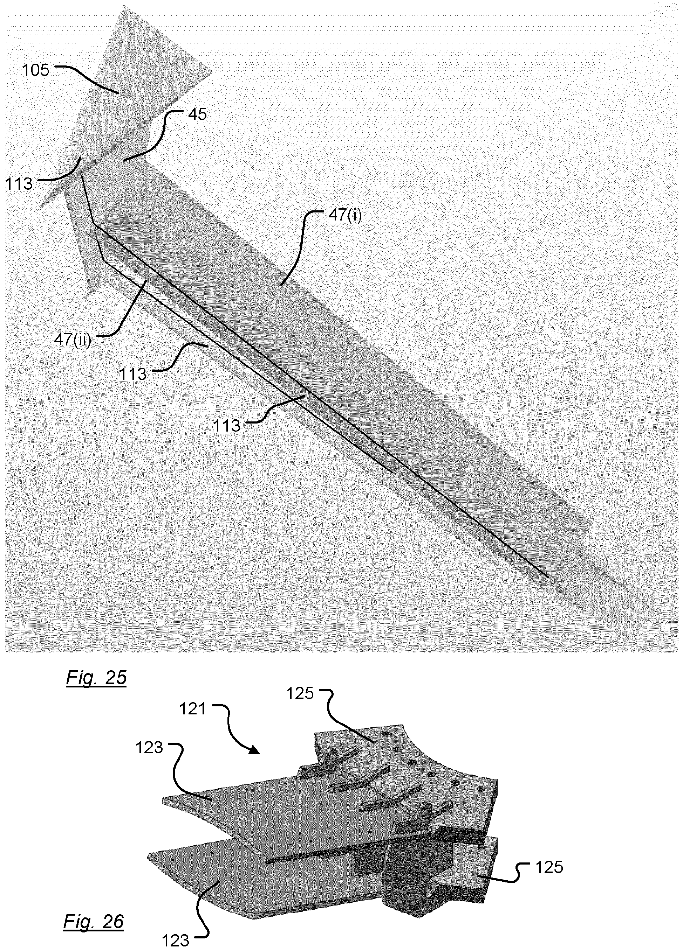

Such a system may comprise, as depicted in Fig. 25, a winglet 105 and sacrificial skins 113 for the leading edges of the blade 45 and spreaders 47 that are all of electrically conducting material (for example, aluminium), and are electrically coupled to one another. In the event of a lightning strike to the winglet, the electricity is routed via the electrically conducting blade skin to the electrically conducting spreader skins, to the tower and ultimately to ground.

Referring now to Fig. 26, there is depicted an alternative spreader attachment mechanism. In this arrangement, a spreader attachment 121 is provided for attaching a spreader to the top support plate 75 (a similar attachment being provided for the attachment of a spreader to the bottom support plate 77). The spreader attachment 121 comprises a pair of spaced plates 123 that are set at an angle (preferably 72 degrees) to a pair of mounting plates 125 that are bolted to the top/bottom support plate 75, 77. A spreader is inserted into the space between the plates 123 and glued in place, and the mounting plates are then bolted to the top/bottom support plate.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the accompanying claims.

For example, as an alternative or in addition to tilting the tower, it is proposed - for all types of VAWT or HAWT that generate AC at an arbitrary frequency, rectify it to DC, then make the output AC referenced to the grid phase from the AC - to mount a radar detector on the tower. Air traffic radar typically turns at about 12rpm, so the tower will see a pulse every five seconds. By adjusting the speed of the turbine - for example by active control of the field of the generator - it is possible to synchronise the phase of our blades and spreaders with the pulse of the radar such that the blades and spreaders are less likely to be in a highly-reflecting orientation when the VAWT is illuminated by radar. The radar signature of the moving parts will thus be reduced significantly, and the glinting of the turbine, caused by it being sometimes in phase with the radar and sometimes out of phase, will be reduced.

It is also the case that whilst it is preferred for winglets to be mounted to the top and bottom of each blade, it will be appreciated that some aerodynamic gains may be achieved by mounting the winglets to just the tops of the blades.

In another envisaged implementation, the safety lock may comprise a piston that is driven into a hole formed in the brake disk instead of into a notch formed in the periphery of the disk.

## Claims

1. A vertical-axis wind turbine (3) (VAWT), comprising:
a turbine assembly (41) comprising a plurality of blades (45) coupled to a rotor assembly (46),
a turbine assembly support tower (43) on which said turbine assembly (41) can be mounted for rotation with respect thereto, said tower (43) being configured so that the blades (45) of the turbine assembly extend generally in parallel to said support tower;
first and second buttresses (49, 51) that are each configured to be coupled to said turbine assembly support tower (43) at a proximal end, a distal end of each said buttress being configured for attachment to a respective buttress support so that each buttress is inclined at an angle relative to said support;
the VAWT being **characterised by**:
a first buttress support and a second buttress support for coupling to said first and second buttresses, respectively, said first and second buttress supports each comprising a buttress grillage (7, 9), each said buttress grillage (7, 9) including a support top plate (67) to which respective distal ends of each buttress (49, 51) can be coupled;
a tower support for coupling to said turbine assembly support tower, said tower support comprising a tower grillage (5) that includes a tower top plate (17) to which said support tower (43) can be coupled; and
means (53, 59, 61) for coupling each said buttress end to a respective support top plate (67) and an end of said tower remote from said turbine assembly to said tower top plate (17), said coupling means being configured so that the orientation of each said buttress end and said tower with respect to respective top plates (67, 17) can be varied.

2. A VAWT according to Claim 1, wherein said first and second buttress grillages and said tower grillage are each configured for attachment to a plurality of screw piles (25).

3. A VAWT according to Claim 2, wherein said first and second buttress grillages and said tower grillage are each configured for attachment to four screw piles (25).

4. A VAWT according to Claim 3, wherein each said grillage comprises a generally X-shaped body, each free end of said X-shaped body including a screw pile connector (23).

5. A VAWT according to any preceding claim, wherein said blades (45) are each coupled to said rotor assembly by one or more spreaders (47).

6. A VAWT according to Claim 5, wherein each said blade is coupled to said rotor assembly by a pair of spreaders.

7. A VAWT according to Claim 6, wherein said blade and spreaders are aerodynamically profiled.

8. A VAWT according to any preceding claim, wherein each said blade includes an aerodynamic delta shaped winglet fixedly coupled to each end of the blade.

9. A VAWT according to any preceding claim, wherein said rotor assembly is configured for attachment to a drive-shaft (73) for rotation therewith, the rotor assembly comprising a plate for attachment to spreaders of said turbine assembly.

10. A VAWT according to Claim 9, wherein said rotor assembly further comprises a brake disk (85) configured for attachment to said drive-shaft for rotation therewith.

11. A VAWT according to Claim 10, comprising a primary braking system (87) that can be brought to bear upon said brake disk to slow the disk and said drive-shaft.

12. A VAWT according to Claim 11, comprising a locking system (89) for locking said brake disk.

13. A VAWT according to Claim 11 and 12, wherein said brake disk comprises a notched peripheral edge (95), said locking system comprising a piston (101) configured to fit within the notches of said brake disk.

14. A VAWT according to any preceding claim, wherein said turbine assembly support tower which comprises a plurality of individual tower modules (43(i), 43(ii), 43(iii)) that are fastened together to form said tower, the arrangement being such that the height of the turbine assembly relative to a support surface to which said tower is attached can be varied.

## Patentansprüche

1. Vertikalachs-Windturbine (3) (VAWT), umfassend:
eine Turbineneinheit (41), die eine Mehrzahl von Schaufeln (45) umfasst, die mit einer Rotoreinheit (46) gekoppelt sind;
einen Turbineneinheit-Stützturm (43), an dem die Turbineneinheit (41) für eine Rotation im Verhältnis dazu angebracht werden kann, wobei der Turm (43) so gestaltet ist, dass sich die Schaufeln (45) der Turbineneinheit allgemein parallel zu dem Stützturm erstrecken;
erste und zweite Pfeiler (49, 51), die jeweils für eine Kopplung mit dem Turbineneinheit-Stützturm (43) an einem proximalen Ende gestaltet sind, wobei ein distales Ende jedes Pfeilers für eine Befestigung an einer entsprechenden Pfeilerstütze gestaltet ist, so dass jeder Pfeiler in einem Winkel im Verhältnis zu der Stütze schräg angeordnet ist;
wobei die VAWT **gekennzeichnet ist durch**:
eine erste Pfeilerstütze und eine zweite Pfeilerstütze zur entsprechenden Kopplung mit dem ersten und dem zweiten Pfeiler, wobei die erste und die zweite Pfeilerstütze jeweils einen Pfeilerrost (7, 9) umfassen, wobei jeder Pfeilerrost (7, 9) eine Stützendeckenplatte (67) aufweist, mit der die entsprechenden distalen Enden jedes Pfeilers (49, 51) gekoppelt werden können;
eine Turmstütze zur Kopplung mit dem Turbineneinheit-Stützturm, wobei die Turmstütze einen Turmrost (5) umfasst, der eine Turmdeckenplatte (17) aufweist, mit welcher der Stützturm (43) gekoppelt werden kann; und
Mittel (53, 59, 61) zur Kopplung jedes Pfeilerendes mit einer entsprechenden Stützendeckenplatte (67) und eines Endes des Turms, das von der Turbineneinheit entfernt ist, mit der Turmdeckenplatte (17), wobei die Kopplungsmittel so gestaltet sind, dass die Ausrichtung des Pfeilerendes und des Turms jeweils im Verhältnis zu den entsprechenden Deckenplatten (67, 17) variiert werden kann.

2. VAWT nach Anspruch 1, wobei der erste und der zweite Pfeilerrost und der Turmrost jeweils für eine Befestigung an einer Mehrzahl von Schraubpfählen (25) gestaltet sind.

3. VAWT nach Anspruch 2, wobei der erste und der zweite Pfeilerrost und der Turmrost jeweils für eine Befestigung an einer vier Schraubpfählen (25) gestaltet sind.

4. VAWT nach Anspruch 3, wobei jeder Rost einen allgemein X-förmigen Körper umfasst, wobei jedes freie Ende des X-förmigen Körpers einen Schraubpfahlverbinder (23) aufweist.

5. VAWT nach einem der vorstehenden Ansprüche, wobei die Schaufeln (45) jeweils durch einen oder mehrere Spreizer (47) mit der Rotoreinheit gekoppelt sind.

6. VAWT nach Anspruch 5, wobei jede Schaufel durch ein Paar von Spreizern mit dem Rotor gekoppelt ist.

7. VAWT nach Anspruch 6, wobei die Schaufel und die Spreizer aerodynamische Profile aufweisen.

8. VAWT nach einem der vorstehenden Ansprüche, wobei jede Schaufel ein aerodynamisches, deltaförmiges Winglet aufweist, das fest an jedem Ende der Schaufel fixiert ist.

9. VAWT nach einem der vorstehenden Ansprüche, wobei die die Rotoreinheit für eine Befestigung an einer Antriebswelle (73) für eine Rotation mit dieser gestaltet ist, wobei die Rotoreinheit eine Platte zur Befestigung an Spreizern der Turbineneinheit umfasst.

10. VAWT nach Anspruch 9, wobei die Rotoreinheit ferner eine Bremsscheibe (85) umfasst, die für eine Befestigung an der Antriebswelle für eine Rotation mit dieser gestaltet ist.

11. VAWT nach Anspruch 10, die ein primäres Bremssystem (87) umfasst, das zum Lagern an der Bremsscheibe geführt werden kann, um die Scheibe und die Antriebswelle zu bremsen.

12. VAWT nach Anspruch 11, die ein Verriegelungssystem (89) zur Verriegelung der Bremsscheibe umfasst.

13. VAWT nach Anspruch 11 oder 12, wobei die Bremsscheibe eine gekerbte periphere Kante (95) umfasst, wobei das Verriegelungssystem einen Kolben (101) umfasst, der so gestaltet ist, dass er in die Kerben der Bremsscheibe passt.

14. VAWT nach einem der vorstehenden Ansprüche, wobei der Turbineneinheit-Stützturm eine Mehrzahl einzelner Turmmodule (43(i), 43(ii), 43(iii)) umfasst, die aneinander angebracht sind, so dass sie den Turm bilden, wobei die Anordnung derart beschaffen ist, dass die Höhe der Turbineneinheit im Verhältnis zu einer Stützfläche, an welcher der Turm angebracht ist, variiert werden kann.

## Revendications

1. Éolienne à axe vertical (3), comprenant :
un ensemble turbine (41) comprenant une pluralité de pales (45) accouplées à un ensemble rotor (46),
une tour de support (43) d'ensemble turbine sur laquelle ledit ensemble turbine (41) peut être monté pour tourner par rapport à celle-ci, ladite tour (43) étant conçue de sorte que les pales (45) de l'ensemble turbine s'étendent généralement parallèlement à ladite tour de support ;
des premier et second contreforts (49, 51) qui sont chacun conçus pour être accouplés à ladite tour de support (43) d'ensemble turbine au niveau d'une extrémité proximale, une extrémité distale de chacun desdits contreforts étant conçue pour être fixée à un support de contrefort respectif de sorte que chaque contrefort soit incliné à un angle par rapport audit support ;
l'écolienne étant **caractérisée par** :
un premier support de contrefort et un second support de contrefort à accoupler auxdits premier et second contreforts, respectivement, lesdits premier et second supports de contrefort comprenant chacun une grille de contrefort (7, 9), ladite chaque grille de contrefort (7, 9) comprenant une plaque supérieure de support (67) à laquelle les extrémités distales respectives de chaque contrefort (49, 51) peuvent être accouplées ;
un support de tour à accoupler à ladite tour de support d'ensemble turbine, ledit support de tour comprenant une grille de tour (5) qui comprend une plaque supérieure de tour (17) à laquelle ladite tour de support (43) peut être accouplée ; et
un moyen (53, 59, 61) pour accoupler ladite chaque extrémité de contrefort à une plaque supérieure de support (67) respective et une extrémité de ladite tour éloignée dudit ensemble turbine à ladite plaque supérieure de tour (17), ledit moyen d'accouplement étant conçu de sorte que l'orientation de ladite chaque extrémité de contrefort et de ladite tour par rapport aux plaques supérieures (67, 17) respectives puisse être modifiée.

2. Éolienne selon la revendication 1, lesdites première et seconde grilles de contrefort et ladite grille de tour étant chacune conçues pour être fixées à une pluralité de pieux à vis (25).

3. Éolienne selon la revendication 2, lesdites première et seconde grilles de contrefort et ladite grille de tour étant chacune conçues pour être fixées à quatre pieux à vis (25).

4. Éolienne selon la revendication 3, ladite chaque grille comprenant un corps généralement en forme de X, chaque extrémité libre dudit corps en forme de X comprenant un raccord de pieu à vis (23).

5. Éolienne selon l'une quelconque des revendications précédentes, lesdites pales (45) étant chacune accouplées audit ensemble rotor par au moins un écarteur (47).

6. Éolienne selon la revendication 5, ladite chaque pale étant accouplée audit ensemble rotor par une paire d'écarteurs.

7. Éolienne selon la revendication 6, ladite pale et lesdits écarteurs étant profilés de manière aérodynamique.

8. Éolienne selon l'une quelconque des revendications précédentes, ladite chaque pale comprenant une ailette aérodynamique en forme de delta accouplée de manière fixe à chaque extrémité de la pale.

9. Éolienne selon l'une quelconque des revendications précédentes, ledit ensemble rotor étant conçu pour être fixé à un arbre d'entraînement (73) pour tourner avec celui-ci, l'ensemble rotor comprenant une plaque pour la fixation à des écarteurs dudit ensemble turbine.

10. Éolienne selon la revendication 9, ledit ensemble rotor comprenant en outre un disque de frein (85) conçu pour être fixé audit arbre d'entraînement pour tourner avec lui.

11. Éolienne selon la revendication 10, comprenant un système de freinage primaire (87) qui peut être amené à reposer sur ledit disque de frein pour ralentir le disque et ledit arbre d'entraînement.

12. Éolienne selon la revendication 11, comprenant un système de verrouillage (89) pour verrouiller ledit disque de frein.

13. Éolienne selon les revendications 11 et 12, ledit disque de frein comprenant un bord périphérique entaillé (95), ledit système de verrouillage comprenant un piston (101) conçu pour s'insérer dans les encoches dudit disque de frein.

14. Éolienne selon l'une quelconque des revendications précédentes, ladite tour de support d'ensemble turbine comprenant une pluralité de modules de tour individuels (43(i), 43(ii), 43(iii)) qui sont fixés ensemble pour former ladite tour, l'agencement étant tel que la hauteur de l'ensemble turbine par rapport à une surface de support à laquelle ladite tour est fixée peut être modifiée.
